# EUROPEAN PATENT SPECIFICATION

(11) **EP 2 691 427 B1**
(45) Date of publication and mention of the grant of the patent: **24.12.2014**
(21) Application number: 12711168.0
(22) Date of filing: 29.03.2012
(51) Int. Cl.: C08F 224/00, C08F 220/00, C08L 37/00

(54) **PROCESS FOR RADICALLY CURING A COMPOSITION**
VERFAHREN ZUR VOLLSTÄNDIGEN HÄRTUNG EINER ZUSAMMENSETZUNG
PROCÉDÉ DE POLYMÉRISATION RADICALAIRE D'UNE COMPOSITION

(30) Priority: 30.03.2011 EP 11160435
(43) Date of publication of application: 05.02.2014
(73) Proprietor: DSM IP Assets B.V., 6411 TE Heerlen (NL)
(72) Inventor: HILKER, Iris, NL-6100 AA Echt (NL); JANSEN, Johan, Franz, Gradus, Antonius, NL-6100 AA Echt (NL); ARFSTEN, Nanning, Joerg, NL-6100 AA Echt (NL)
(74) Representative: Arendsen, Alexander Ferdinand
(86) International application number: PCT/EP2012/055667
(87) International publication number: WO 2012/130960

(56) References cited:
- WO-A2-2007/147782
- GB-A- 641 310
- M.K. AKKAPEDDI: "The free radical copolymerization characrteristics of alpha-methylene gamma-butyrolactone", POLYMER, vol. 20, 1979, pages 1215-1216, XP002638452,

## Description

The present invention relates to a process for radically curing a composition comprising a methacrylate containing compound (a1) and a monomer copolymerizable with said methacrylate containing compound in the presence of tertiary aromatic amine (c) and a peranhydride (d).

Such processes are known in the art. For example, a composition comprising a methacrylate functional resin diluted in styrene as reactive diluent and pre-accelerated with a tertiary aromatic amine can be efficiently radical copolymerized (cured) with a peranhydride. Styrene is often used as reactive diluent. Although styrene is a very effective reactive diluent, since styrene has a high copolymerization ability and a good cutting power (viscosity of the composition can be lowered efficiently when using styrene as comonomer), styrene has however an undesirable odour which is even more hindering since styrene is volatile. In view of this, there is a need to at least partly replace styrene by another comonomer with a good reactivity and good cutting power, but has less odour and/or is less volatile (i.e. has a higher boiling point). A standard replacement would be the use of high boiling methacrylate containing compounds. However, in general they have a reduced cutting power and furthermore they result in general in severe oxygen inhibition, i.e. upon curing in air, the surface remains tacky or even wet (uncured).

The object of the present invention is to provide a process with less odour and with high curing efficiency (as demonstrated by short gel time, short peak time and/or high peak temperature).

The object has surprisingly achieved in that the composition comprises a compound (b) according to formula (1) as monomer copolymerizable with said methacrylate containing compound 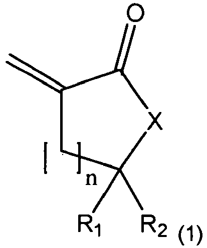 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain.

It has furthermore surprisingly been found that, when effecting the process according to the invention in the presence of air, the curing can be improved, in particular the tackiness of the air surface can be reduced and even tack free surfaces can be obtained. An additional advantage is that compound (b) has a good cutting power in compositions comprising a methacrylate containing compound (a1) with a number-average molecular weight Mₙ of at least 600 Dalton.

It has furthermore surprisingly been found that the process of the present invention can result in a higher glass transition temperature (T_{g}) and/or higher crosslink density of the cured network and thus an improved cured network can be obtained.

An additional advantage of using compounds according to formula (1) is that they can be prepared from biobased raw materials.

The radical curing process according to the invention in particular comprises
(i) providing a composition comprising a methacrylate containing compound (a1), a compound (b) according to formula (1) (copolymerizable with said methacrylate containing compound (a1)), a tertiary aromatic amine (c),
(ii) adding a peranhydride (d) to said composition.

The composition comprises a compound (b) according to formula (1).

Such compounds can be commercially obtained from for example TCI Europe and can be prepared with the method as described for example by Gary M. Ksander, John E. McMurry, and Mark Johnson, "A Method for the Synthesis of Unsaturated Carbonyl Compounds" in J. Org. Chem. 1977, vol. 42, issue 7, pages 1180-1185, or by Mitsuru Ueda and Masami Takahasi, "Radical-Initiated Homo- and Copolymerization of α-Methyl-γ-Butyrolactone" in J. Pol. Sci. A 1982, vol. 20, p. 2819-2828.

Preferably, n is 1 or 2. More preferably, n is 1. X is preferably O. Preferably, R₁ and R₂ each individually represent H or CH₃. More preferably, R₁ and R₂ are both H or R₁ is H and R₂ is CH₃. In a preferred embodiment of the invention, the composition comprises a compound (b) according to formula (2) 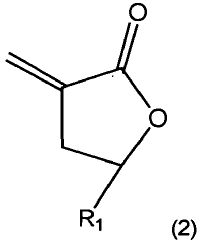 whereby R₁ is H or CH₃.

The composition preferably comprises methacrylate containing compounds (a1) with a number-average molecular weight Mₙ of at least 225 Dalton. As used herein, the number-average molecular weight (Mₙ) is determined in tetrahydrofuran using GPC employing polystyrene standards. Preferably, the methacrylate containing compounds (a1) have a number-average molecular weight Mₙ of at most 10000 Dalton.

Preferably, at least part of the methacrylate containing compound (a1) present in the composition has a methacrylate functionality of at least 2. As used herein, methacrylate functionality is defined as the number of CH₂=CMeCOO- per molecule of methacrylate containing compound. In a preferred embodiment, the composition comprises a mixture of methacrylate containing compounds (a1) which mixture has an average methacrylate functionality higher than 1, preferably higher than 1.5 and more preferably higher than 1.7. The upper limit of the average functionality is not critical. Preferably the average functionality is lower than 4, more preferably lower than 3.

Preferably, the methacrylate containing compounds (a1) further contain at least one ether group, at least one hydroxyl group and/or at least one urethane group. In one preferred embodiment, the methacrylate containing compound (a1) further contains an ether group. A preferred methacrylate containing compound (a1) further containing an ether group is an alkoxylated bisphenol A dimethacrylate.

In another preferred embodiment, the methacrylate containing compound (a1) further contains an ether group and a hydroxyl group. A methacrylate containing compound (a1) further containing an ether group and a hydroxyl group is preferably obtained by reaction of an epoxy oligomer or polymer with methacrylic acid or methacrylamide, preferably with methacrylic acid. A preferred methacrylate containing compound (a1) further containing an ether group and a hydroxyl group is a bisphenol A glycerolate dimethacrylate.

In still another preferred embodiment, the methacrylate containing compound (a1) further contains an urethane group. A methacrylate containing compound (a1) further containing an urethane group is preferably obtained by reaction of a hydroxyl functional methacrylate with an isocyanate.

The methacrylate containing compound (a1) present in the composition may also be a mixture of methacrylate containing compounds as described above.

In case the composition comprises a methacrylate containing compound (a1) with a number-average molecular weight Mₙ of at least 600 Dalton, the composition may further comprise an ethylenically unsaturated compound (a2) with a number-average molecular weight Mₙ of at most 300 Dalton. Non-limiting preferred examples are styrene, α-methylstyrene, vinyltoluene, hydroxyethylmethacrylate, hydroxypropylmethacrylate, methyl methacrylate, ethyl methacrylate, hydroxybutylvinylether, N-vinylcaprolactam, N-vinyl pyrrolidone, laurylmethacrylate or mixtures thereof.

The amount of compound (b) relative to the total amount of compounds (a) and (b) is preferably at least 1 wt.%, more preferably at least 5 wt.%, even more preferably at least 10 wt.% and even more preferably at least 25 wt.%. As used herein, the amount of compounds (a) is the total amount of compounds (a1) and (a2). The amount of compound (b) relative to the total amount of compounds (a) and (b) is preferably at most 99 wt.%, more preferably at most 95 wt.%, more preferably at most 90 wt.%, even more preferably at most 70 wt.% and even more preferably at most 65 wt.%. Preferably, the amount of compound (b) relative to the total amount of compounds (a) and (b) is from 1 to 95 wt.%, and more preferably from 25 to 65 wt.%.

Preferably the tertiary aromatic amine has the following structure: 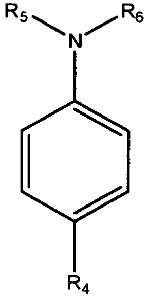 in which R4=H, C1-C5 alkyl, O(C1-C5)alkyl; R5 and R6 are independently selected from C1-C4 alkyl optionally substituted with hydroxyl or (poly) ether groups. Preferably, R4= H or CH3. Preferably R5 and/or R6 are CH3, C2H5, C2H4OH, C3H7 and CH2CH(OH)CH3.

Very suitable examples of tertiary aromatic amines are, for instance, 4-methoxy-N,N-dimethylaniline (R4=OCH3, R5 and R6=CH3), N,N-dimethylaniline (R4=H, R5 and R6=CH3), N,N-diethylaniline (R4=H, R5 and R6=C2H5), N,N-diethanolaniline (R4=H, R5 and R6=CH2CH2OH), N-methyl N-ethanol aniline (R4=H, R5=CH3, R6=CH2CH2OH), N,N-diethanoltoluidine(R4=CH3, R5 and R6=CH2CH20H), N,N-diethanolaniline mono-methylether (R4=H, R5=CH2CH2OH, R6=CH2CH2OCH3), N,N-diethanolaniline dimethylether (R4=H, R5,R6=CH2CH2OCH3), N,N-diisopropanolaniline (R4=H, R5 and R6=CH2CH(OH)CH3), N,N-dimethyltoluidine (R4, R5 and R6 = CH3), N,N-diethyltoluidine (R4=CH3, R5 and R6=C2H5), N,N-diisopropanoltoluidine DIPT (R4=CH3, R5 and R6=CH2CH(OH)CH3), N,N-diisopropanoltoluidine monomethyl ether (R4=CH3, R5=CH2CH(OCH3)CH3, R6=CH2CH(OH)CH3), N,N-diisopropanoltoluidine dimethyl ether((R4=CH3, R5 and R6=CH2CH(OCH3)CH3), N,N-diglycidyl-4-glycidyloxyaniline (R4=OCH2CHOCH2, R5 and R6= OCH2CHOCH2 and N,N-diglycidylaniline (R4=H, R5 and R6= OCH2CHOCH2),. Also N,N-ethoxylated or N,N-propoxylated anilines, respectively ethoxylated or propoxylated toluidines may suitably be used and are considered to be encompassed in the group of suitable tertiary aromatic amines. It is obvious that especially the hydroxyl functional tertiary aromatic amines may be incorporated in a polymer. Preferred aromatic amines are the anilines and the toluidines.

The amount of tertiary aromatic amine (compound (c)) relative to the total amount of compound (a) and compound (b) is preferably from 0.01 to 10 wt.%, more preferably from 0.1 to 5 wt.%.

A very suitable example of an aromatic peranhydride is dibenzoyl peroxide. A very suitable example of an alipahtic peranhydride is dilauroyl peroxide.

The amount of peranhydride (compound (d)) relative to the total amount of compounds (a) and (b) is preferably from 0.01 to 30 wt.%, more preferably from 0.1 to 10 wt.%.

The molar amount of peranhydride (compound (d)) relative to the molar amount of tertiary aromatic amine (compound (c)) is preferably from 0.05 to 10, more preferably from 0.1 to 5.

The composition preferably further comprises a radical inhibitor. These radical inhibitors are preferably chosen from the group of phenolic compounds, benzoquinones, hydroquinones, catechols, stable radicals and/or phenothiazines. The amount of radical inhibitor that can be added may vary within rather wide ranges, and may be chosen as a first indication of the gel time as is desired to be achieved.

Suitable examples of radical inhibitors that can be used in the compositions according to the invention are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

Advantageously, the amount of radical inhibitor in the composition (relative to the total amount of the composition) is in the range of from 0.0001 to 10 % by weight. More preferably, the amount of inhibitor in the composition is in the range of from 0.001 to 1 % by weight. The skilled man quite easily can assess, in dependence of the type of inhibitor selected, which amount thereof leads to good results according to the invention.

In a preferred embodiment, the process comprises adding the peranhydride to a composition comprising compounds (a1), (b) and (c). Said adding is preferably done by mixing the peranhydride into the composition comprising compounds (a1), (b) and (c).

The process according to the invention is preferably effected at a temperature in the range of from -20 to +150 °C, more preferably in the range of from -20 to +100 °C and even more preferably in the range of from -20 to + 40 °C.

The present invention further relates to a multicomponent system comprising a methacrylate containing compound (a1), a monomer copolymerizable with said methacrylate containing compound, a tertiary aromatic amine (c) and a peranhydride (d), wherein the system comprises a compound (b) according to formula (1) as monomer copolymerizable with said methacrylate containing compound 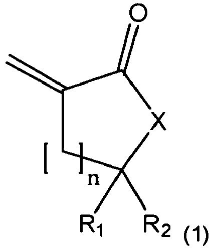 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain.

Preferred compounds (a1), (b) and (c) as well as the amounts are as described above. The system may further comprise additional compounds in amounts as described above.

The use of the multicomponent system according to the invention requires mixing of at least the compounds (a1), (b) and (c) together with the peranhydride to obtain a cured network. As used herein, multicomponent systems means a system with at least two spatially separated components whereby the peranhydride is present in one component that does not comprise radical copolymerizable compounds including compounds (a1) and (b) in order to prevent premature radical copolymerization of the compounds (a1) and (b) prior to the use of the multicomponent system to obtain the cured network. At the moment that the radically copolymerization of the compounds (a1) and (b) is desired, at least a peranhydride is added to this composition. Preferably, said adding is done by mixing the peranhydride into the composition comprising compounds (a1) and (b). The multicomponent system according to the invention comprises at least two components.

In one embodiment, the multicomponent system comprises at least three components I, II and III, whereby component I consists of a composition comprising compounds (a1) and (b), component II consists of a composition comprising compound (c) and component III comprises the peranhydride (d).

In another embodiment, the system comprises at least two components I and II, whereby component I consists of a composition comprising compounds (a1), (b) and (c) and component II comprises the peranhydride (d).

The present invention further relates to a thermosetting composition comprising a methacrylate containing compound (a1), a monomer copolymerizable with said methacrylate containing compound, a tertiary aromatic amine (c), wherein the composition comprises a compound (b) according to formula (1) as monomer copolymerizable with said methacrylate containing compound 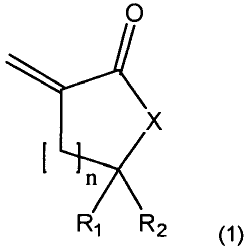 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain, and the composition comprises (in)organic filler and whereby the composition is curable with a peranhydride.

Preferred compounds (a1), (b) and (c) as well as the amounts are as described above. The system may further comprise additional compounds such as a radical inhibitor in amounts as described above.

The amount of (in)organic filler relative to the total amount of compounds (a), (b) and (c) is preferably from 10 to 90 wt.%. Preferably, the thermosetting composition comprises fibre as filler. Suitable fillers are aluminium trihydrate, calcium carbonate, mica, glass, microcrystalline silica, quartz, barite and/or talc. These fillers may be present in the form of sands, flours or molded objects, especially in the form of fibers or spheres. Examples of fibres are glass fibres and carbon fibres.

The present invention further relates to cured objects obtained by the process as described above or obtained by mixing the compounds of the multicomponent system as described above or obtained by curing the thermosetting composition as described above with a peranhydride.

The present invention further relates to the use of such a cured object in automotive, boats, chemical anchoring, roofing, construction, containers, relining, pipes, tanks, flooring or windmill blades.

The invention is now demonstrated by means of a series of examples and comparative examples. All examples are supportive of the scope of claims. The invention, however, is not restricted to the specific embodiments as shown in the examples.

### Gel timer experiments

In some of the Examples and Comparative Experiments presented hereinafter, it is mentioned that curing was monitored by means of standard gel time equipment. This is intended to mean that both the gel time (T_{gel} or T₂₅-_{>35°C}) and peak time (Tₚₑₐₖ or T_{25->peak}) and peak temperature were determined by exotherm measurements according to the method of DIN 16945 when curing the resin with the peroxides as indicated in the Examples and Comparative Examples. The equipment used therefore was a Soform gel timer, with a Peakpro software package and National Instruments hardware; the waterbath and thermostat used were respectively Haake W26, and Haake DL30.

### Example 1

To a mixture of 96 g α-methylene butyrolactone (MBL), 2 g butane diol dimethacrylate (BDDMA) and 2g DIPT (N,N-diisopropanoltoluidine) was added 10 g Perkadox 20S (20% dibenzoyl peroxide on talc). Part of the resulting mixture was poured in an aluminum dish with a diameter of 10 cm up to a height of 1 mm. After 30 min the cured casting was inspected. The surface of the casting was hard and dry and the integrity (manually evaluated) was good.

### Comparative experiments A1-A6

Example 1 was repeated except that instead of MBL the following compounds were used:
A1) methyl methacrylate (MMA),
A2) 2-hydroxy propyl methacrylate (HPMA),
A3) Lauryl methacrylate (LMA),
A4) BDDMA ,
A5) ethyl acrylate (EA)
A6) styrene (St)

In all cases the surface of the 1 mm castings were wet, being indicative of severe oxygen inhibition. Furthermore in comparative experiment A6 the total mixture was not cured (also not after 24 hrs).

Example 1 combined with comparative experiments A1-A5 clearly demonstrate that α-methylene butyrolactone can suitably be used in combination with a peranhydride/tertiary aromatic amine system as this can result in a tack free curing in the presence of air. This result could not be achieved with (meth)acrylates nor styrene.

The usefulness of α-methylene butyrolactone is further illustrated by the boiling point of MBL (bp=88°C, 12 mm Hg) especially when compared to styrene (bp=145°C) and methyl methacrlate (bp=100°C). This means that the compounds according to formula (1) are non-volatile compounds and have a boiling point in the same range as high boiling methacrylates like lauryl methacrylate ( bp=142C, 4 mmHg) or 2-hydroxypropyl methyacrylate (bp=97C, 12 mmHg).

### Examples 2-4 and comparative experiments B1-B12

To a mixture of 50 g SR540 (ethoxylated bisphenol A dimethacrylate, Sartomer) and 50 g MBL in a plastic beaker was added 1 g of various amines (see table 1) and after stirring for 5 minutes, followed by adding 1g of various peroxides (see table 1) in order to cure the mixtures in the beaker. The cure results are depicted in table 1.

**Table1**

| | Amine | Peroxide | Type | |
|---|---|---|---|---|
| Example 2 | N,N-Diethyl aniline | Perkadox 20 S | Aromatic peranhydride | Cure |
| Example 3 | N,N-dimethyl aniline | Perkadox CH 50L | Aromatic peranhydride | Cure |
| Example 4 | DIPT | Laurox S | Aliphatic peranhydride | Cure |
| Comp exp B1 | N,N-dimethyl aniline | Butanox M50 | Ketal peroxide | No cure |
| Comp exp B2 | N,N-dimethyl aniline | Trigonox C | Perester | No cure |
| Comp exp B3 | N,N-dimethyl aniline | Trigonox 117 | Percarbonate | No cure |
| Comp exp B4 | N,N-dimethyl aniline | Trigonox B | Perether | No cure |
| Comp exp B5 | N,N-dimethyl aniline | Trigonox 44B | Ketal peroxide | No cure |
| Comp exp B6 | N,N-dimethyl aniline | Trigonox AW 70 | Hydroperoxide | No cure |
| Comp exp B7 | 2,3-dimethyl aniline | Perkadox CH 50L | Aromatic peranhydride | No cure |
| Comp exp B8 | 2,6-dimethyl aniline | Perkadox CH 50L | Aromatic peranhydride | No cure |
| Comp exp B9 | Aniline | Perkadox CH 50L | Aromatic peranhydride | No cure |
| Comp exp B10 | Triethyl amine | Perkadox CH 50L | Aromatic peranhydride | No cure |
| Comp exp B11 | Benzyl trimethyl ammonium chloride | Perkadox CH 50L | Aromatic peranhydride | No cure |
| Comp exp B12 | Butyl amine | Perkadox CH 50L | Aromatic peranhydride | No cure |

These examples and the comparative experiments clearly show that for a good and efficient curing of a composition comprising a methacrylate containing compound and MBL, a peranhydride and a tertiary aromatic amine have to be used.

### Example 5 and Comparative Experiments C1-C3

To 30.6 g SR540 and 14.4 g of various monomers (see table 2) was added 840 mg N,N-diethyl aniline. Of these mixtures the viscosity was determined (Brookfield CAP 1000, 25C 750 rpm, cone 1). Thereafter 840 mg Perkadox CH 50 L was added. 12 g of the mixture was poured in an aluminum dish for the determination of Barcol hardness. Furthermore, of 25 g the curing was monitored in the standard gel timer equipment. Barcol hardness was measured according to DIN EN 59. The results are shown in table 2.

**Table 2**

| | Monomer | Viscosity (Pa.s) | Gel time (min) | Peak time (min) | Peak temp (°C) | Barcol hardness top | Barcol hardness bottom |
|---|---|---|---|---|---|---|---|
| Example 5 | MBL | 0.041 | 6.9 | 9.2 | 148 | Tacky | 48 |
| Comp C1 | Sty | 0.027 | 19.3 | 27.5 | 121 | Wet | 28 |
| Comp C2 | LMA | 0.043 | 3 | 6.1 | 114 | Wet | 0 |
| Comp C3 | HPMA | 0.051 | 3.2 | 5.1 | 138 | wet | cracked |

Example 5 combined with the comparative experiments clearly show that the combination of a good cutting power (indicated by the low viscosity values), no volatiles (indicated by the high boiling point), high reactivity (indicated by the gel time data), good structural integrity (no cracks) can only be achieved by using formulations according to the invention.

The castings of Example 5 and comparative experiment C1 were subjected to DMA analysis according to ASTM D5026. The results are:

| | |
|---|---|
| Comp C1: | Modulus @ 23°C: 2612 MPa; Tg 95°C |
| Example 5: | Modulus @ 23°C: 3089 MPa; Tg 112°C |

These results indicate a better formation of the x-linked network using the formulation according to the invention.

### Example 6 and comparative experiment D

In Example 6, 5 g MBL and 5 g styrene were added to 40 g Daron XP-45 (an epoxy methacrylate resin). Next 1 g NL-64-10P (10 % N,N-dimethyl aniline solution, Akzo Nobel) was added and after stirring for 5 min 1 g Perkadox CH 50 L was added. The mixture was poured in an aluminum dish in order to prepare a 4 mm thick casting. After standing at room temperature for 3 hrs the casting was post-cured in an oven at 150C for an additional 4 hrs. Next the casting was used for a dynamic mechanical analysis (DMA) measurement.

In comparative experiment D the MBL was replaced by styrene and thus 10 g styrene was used.

The results are shown in table 3

**Table 3**

| | Modulus at 23°C (MPa) | Tg (°C) | Modulus at 250°C (MPa) |
|---|---|---|---|
| Example 6 | 3222 | 146 | 53 |
| Comp experiment D | 3129 | 136 | 38 |

The increase in Tg by using formulations according to the invention is already surprising. The increase in Tg especially in combination with the rubber modulus (i.e. the modulus at 250°C) indicates a very surprising feature of formulations according to the invention namely that by using a formulation according to the invention the x-link density increases being a strong indication of a better formation of cured networks.

## Claims

1. Process for radically curing a composition comprising a methacrylate containing compound (a1) and a monomer copolymerizable with said methacrylate containing compound in the presence of tertiary aromatic amine (c) and a peranhydride (d), **characterized in that** the composition comprises a compound (b) according to formula (1) as monomer copolymerizable with said methacrylate containing compound 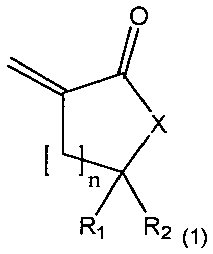 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain.

2. Process according to claim 1, **characterized in that** compound (b) is according to formula (2). 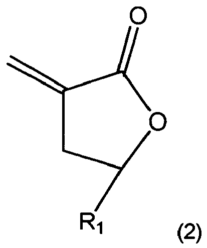 whereby R₁ is H or CH₃.

3. Process according to claim 1 or 2, **characterized in that** the methacrylate containing compound (a1) has a number-average molecular weight Mₙ of at least 225 Dalton and of at most 10000 Dalton.

4. Process according to anyone of the preceding claims, **characterized in that** at least part of the methacrylate containing compound (a1) present in the composition has a methacrylate functionality of at least 2.

5. Process according to anyone of the preceding claims, **characterized in that** the average functionality of the methacrylate containing compounds (a1) is higher than 1, preferably higher than 1.5 and more preferably higher than 1.7

6. Process according to anyone of the preceding claims, **characterized in that** the average functionality of the methacrylate containing compounds (a1) is lower than 4, more preferably lower than 3.

7. Process according to anyone of the preceding claims, **characterized in that** the methacrylate containing compounds (a1) further contain at least one ether group and at least one hydroxyl group.

8. Process according to anyone of the preceding claims, **characterized in that** the methacrylate containing compounds (a1) further contain at least one urethane group.

9. Process according to anyone of the preceding claims, **characterized in that** the composition comprises a methacrylate containing compound (a1) with a number-average molecular weight Mₙ of at least 600 Dalton and the composition further comprises an ethylenically unsaturated compound (a2) with a number-average molecular weight Mₙ of at most 300 Dalton.

10. Process according to anyone of the preceding claims, **characterized in that** the amount of compound (b) relative to the total amount of compounds (a) and (b) is from 25 to 65 wt.%.

11. Process according to anyone of the preceding claims, **characterized in that** the amount of tertiary aromatic amine (compound (c)) relative to the total amount of compound (a) and compound (b) is from 0.01 to 10 wt.%.

12. Process according to anyone of the preceding claims, **characterized in that** the molar amount of peranhydride (compound (d)) relative to the molar amount of tertiary aromatic amine (compound (c)) is from 0.05 to 10.

13. Process according to anyone of the preceding claims, **characterized in that** the amount of peranhydride (compound (d) relative to the total amount of compounds (a) and (b) is from 0.01 to 30 wt.%.

14. Multicomponent system comprising a methacrylate containing compound (a1), a monomer copolymerizable with said methacrylate containing compound, a tertiary aromatic amine (c) and a peranhydride (d), **characterized in that** the system comprises a compound (b) according to formula (1) as monomer copolymerizable with said methacrylate containing compound 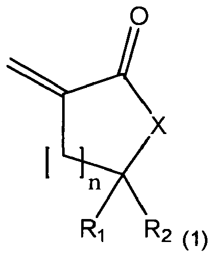 whereby whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain.

15. Thermosetting composition comprising a methacrylate containing compound (a1), a monomer copolymerizable with said methacrylate containing compound, a tertiary aromatic amine (c), **characterized in that** the composition comprises a compound (b) according to formula (1) as monomer copolymerizable with said methacrylate containing compound 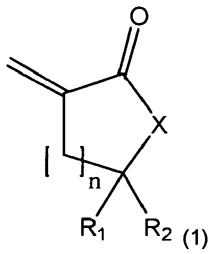 whereby n= 0-3; R₁ and R₂ each individually represent H, C₁-C₂₀ alkyl, C₃-C₂₀ cycloalkyl, C₆-C₂₀ aryl, C₇-C₂₀ alkylaryl or C₇-C₂₀ arylalkyl; X = O, S or NR₃ whereby R₃ = H, C₁-C₂₀ alkyl, C₃-C₂₀ cycloalkyl, C₆-C₂₀ aryl, C₇-C₂₀ alkylaryl, C₇-C₂₀ arylalkyl, part of a polymer chain or attached to a polymer chain, and the composition comprises (in)organic filler and whereby the composition is curable with a peranhydride.

16. Cured object obtained by the process according to anyone of claims 1-13 or obtained by mixing the compounds of the multicomponent system according to claim 14 or obtained by curing the thermosetting composition according to claim 15 with a peranhydride.

17. Use of the cured object of claim 16 in automotive, boats, chemical anchoring, roofing, construction, containers, relining, pipes, tanks, flooring or windmill blades.

## Patentansprüche

1. Verfahren zum radikalischen Härten einer Zusammensetzung, die eine methacrylathaltige Verbindung (a1) und ein mit der methacrylathaltigen Verbindung copolymerisierbares Monomer umfasst, in Gegenwart eines tertiären aromatischen Amins (c) und eines Peranhydrids (d), **dadurch gekennzeichnet, dass** die Zusammensetzung als mit der methacrylathaltigen Verbindung copolymerisierbares Monomer eine Verbindung (b) gemäß Formel (1) umfasst 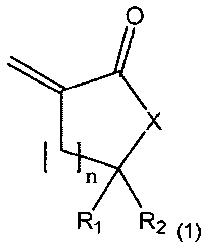 wobei n = 0 bis 3; R₁ und R₂ jeweils individuell für H, C₁-C₂₀-Alkyl, C₃-C₂₀-Cycloalkyl, C₆-C₂₀-Aryl, C₇-C₂₀-Alkylaryl oder C₇-C₂₀-Arylalkyl stehen; X = O, S oder NR₃, wobei R₃ = H, C₁-C₂₀-Alkyl, C₃-C₂₀-Cycloalkyl, C₆-C₂₀-Aryl, C₇-C₂₀-Alkylaryl, C₇-C₂₀-Arylalkyl, Teil einer Polymerkette oder an eine Polymerkette gebunden.

2. Verfahren nach Anspruch 1, **dadurch gekennzeichnet, dass** Verbindung (b) der Formel (2) entspricht 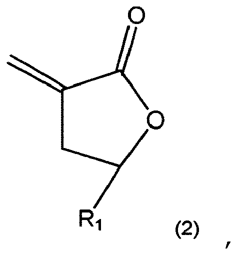 wobei R₁ für H oder CH₃ steht.

3. Verfahren nach Anspruch 1 oder 2, **dadurch gekennzeichnet, dass** die methacrylathaltige Verbindung (a1) ein zahlenmittleres Molekulargewicht Mₙ von mindestens 225 Dalton und höchstens 10.000 Dalton aufweist.

4. Verfahren nach einem der vorhergehenden Ansprüche, **dadurch gekennzeichnet, dass** mindestens ein Teil der in der Zusammensetzung vorliegenden methacrylathaltigen Verbindung (a1) eine Methacrylatfunktionalität von mindestens 2 aufweist.

5. Verfahren nach einem der vorhergehenden Ansprüche, **dadurch gekennzeichnet, dass** die durchschnittliche Funktionalität der methacrylathaltigen Verbindungen (a1) größer als 1, vorzugsweise größer als 1,5 und weiter bevorzugt größer als 1,7 ist.

6. Verfahren nach einem der vorhergehenden Ansprüche, **dadurch gekennzeichnet, dass** die durchschnittliche Funktionalität der methacrylathaltigen Verbindungen (a1) kleiner als 4 und weiter bevorzugt kleiner als 3 ist.

7. Verfahren nach einem der vorhergehenden Ansprüche, **dadurch gekennzeichnet, dass** die methacrylathaltigen Verbindungen (a1) ferner mindestens eine Ethergruppe und mindestens eine Hydroxylgruppe enthalten.

8. Verfahren nach einem der vorhergehenden Ansprüche, **dadurch gekennzeichnet, dass** die methacrylathaltigen Verbindungen (a1) ferner mindestens eine Urethangruppe enthalten.

9. Verfahren nach einem der vorhergehenden Ansprüche, **dadurch gekennzeichnet, dass** die Zusammensetzung eine methacrylathaltige Verbindung (a1) mit einem zahlenmittleren Molekulargewicht Mₙ von mindestens 600 Dalton umfasst und die Zusammensetzung ferner eine ethylenisch ungesättigte Verbindung (a2) mit einem zahlenmittleren Molekulargewicht Mₙ von höchstens 300 Dalton umfasst.

10. Verfahren nach einem der vorhergehenden Ansprüche, **dadurch gekennzeichnet, dass** die Menge von Verbindung (b), bezogen auf die Gesamtmenge der Verbindungen (a) und (b), 25 bis 65 Gew.-% beträgt.

11. Verfahren nach einem der vorhergehenden Ansprüche, **dadurch gekennzeichnet, dass** die Menge von tertiärem aromatischem Amin (Verbindung (c)), bezogen auf die Gesamtmenge der Verbindungen (a) und (b), 0,01 bis 10 Gew.-% beträgt.

12. Verfahren nach einem der vorhergehenden Ansprüche, **dadurch gekennzeichnet, dass** die molare Menge von Peranhydrid (Verbindung (d)), bezogen auf die molare Menge von tertiärem aromatischem Amin (Verbindung (c)), 0,05 bis 10 beträgt.

13. Verfahren nach einem der vorhergehenden Ansprüche, **dadurch gekennzeichnet, dass** die Menge von Peranhydrid (Verbindung (d)), bezogen auf die Gesamtmenge von Verbindung (a) und (b), 0,01 bis 30 Gew.-% beträgt.

14. Mehrkomponentensystem, umfassend eine methacrylathaltige Verbindung (a1), ein mit der methacrylathaltigen Verbindung copolymerisierbares Monomer, ein tertiäres aromatisches Amin (c) und ein Peranhydrid (d), **dadurch gekennzeichnet, dass** das System als mit der methacrylathaltigen Verbindung copolymerisierbares Monomer eine Verbindung (b) gemäß Formel (1) umfasst 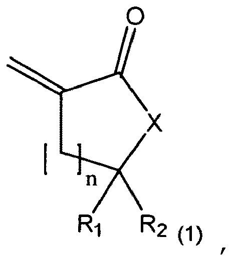 wobei n = 0 bis 3; R₁ und R₂ jeweils individuell für H, C₁-C₂₀-Alkyl, C₃-C₂₀-Cycloalkyl, C₆-C₂₀-Aryl, C₇-C₂₀-Alkylaryl oder C₇-C₂₀-Arylalkyl stehen; X = O, S oder NR₃, wobei R₃ = H, C₁-C₂₀-Alkyl, C₃-C₂₀-Cycloalkyl, C₆-C₂₀-Aryl, C₇-C₂₀-Alkylaryl, C₇-C₂₀-Arylalkyl, Teil einer Polymerkette oder an eine Polymerkette gebunden.

15. Wärmehärtende Zusammensetzung, umfassend eine methacrylathaltige Verbindung (a1), ein mit der methacrylathaltigen Verbindung copolymerisierbares Monomer, ein tertiäres aromatisches Amin (c), **dadurch gekennzeichnet, dass** die Zusammensetzung als mit der methacrylathaltigen Verbindung copolymerisierbares Monomer eine Verbindung (b) gemäß Formel (1) umfasst 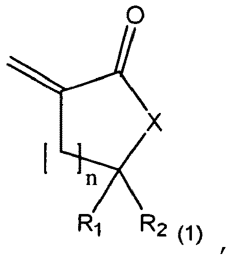 wobei n = 0 bis 3; R₁ und R₂ jeweils individuell für H, C₁-C₂₀-Alkyl, C₃-C₂₀-Cycloalkyl, C₆-C₂₀-Aryl, C₇-C₂₀-Alkylaryl oder C₇-C₂₀-Arylalkyl stehen; X = O, S oder NR₃, wobei R₃ = H, C₁-C₂₀-Alkyl, C₃-C₂₀-Cycloalkyl, C₆-C₂₀-Aryl, C₇-C₂₀-Alkylaryl, C₇-C₂₀-Arylalkyl, Teil einer Polymerkette oder an eine Polymerkette gebunden, und die Zusammensetzung (an)organischen Füllstoff umfasst und wobei die Zusammensetzung mit einem Peranhydrid härtbar ist.

16. Gehärtetes Objekt, erhalten durch das Verfahren nach einem der Ansprüche 1-13 oder erhalten durch Mischen der Verbindungen des Mehrkomponentensystems nach Anspruch 14 oder erhalten durch Härten der wärmehärtenden Zusammensetzung nach Anspruch 15 mit einem Peranhydrid.

17. Verwendung des gehärteten Objekts nach Anspruch 16 in Autos, in Booten, bei der chemischen Verankerung, im Dachbau, im Hochbau, in Behältern, beim Nachfüttern, in Rohren, in Tanks, in Bodenbelägen oder in Windkraftwerksflügeln.

## Revendications

1. Procédé permettant de faire durcir par voie radicalaire une composition comprenant un composé contenant une fonctionnalité méthacrylate (a1) et un monomère copolymérisable avec ledit composé contenant une fonctionnalité méthacrylate en présence d'une amine aromatique tertiaire (c) et d'un peranhydride (d), **caractérisé en ce que** la composition comprend un composé (b) répondant à la formule (1) en tant que monomère copolymérisable avec ledit composé contenant une fonctionnalité méthacrylate 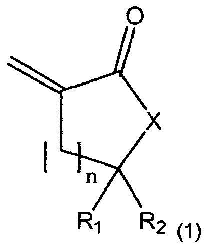 où
n = 0-3 ;
R₁ et R₂ représentent chacun individuellement H, un alkyle en C₁-C₂₀, un cycloalkyle en C₃-C₂₀, un aryle en C₆-C₂₀, un alkylaryle en C₇-C₂₀ ou un arylalkyle en C₇-C₂₀ ;
X = O, S ou NR₃ où
R₃ = H, un alkyle en C₁-C₂₀, un cycloalkyle en C₃-C₂₀, un aryle en C₆-C₂₀, un alkylaryle en C₇-C₂₀, un arylalkyle en C₇-C₂₀ ou une partie d'une chaîne de polymère ou est attaché à une chaîne de polymère.

2. Procédé selon la revendication 1, **caractérisé en ce que** le composé (b) répond à la formule (2) 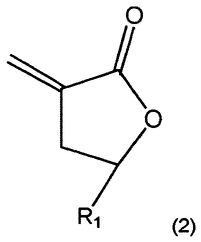 où
R₁ est H ou CH₃.

3. Procédé selon la revendication 1 ou 2, **caractérisé en ce que** le composé contenant une fonctionnalité méthacrylate (a1) a une masse moléculaire moyenne en nombre Mₙ d'au moins 225 Daltons et d'au maximum 10 000 Daltons.

4. Procédé selon l'une quelconque des revendications précédentes, **caractérisé en ce qu'**au moins une partie du composé contenant une fonctionnalité méthacrylate (a1) présent dans la composition a une fonctionnalité méthacrylate d'au moins 2.

5. Procédé selon l'une quelconque des revendications précédentes, **caractérisé en ce que** la fonctionnalité moyenne des composés contenant une fonctionnalité méthacrylate (a1) est supérieure à 1, de préférence supérieure à 1,5 et de préférence encore supérieure à 1, 7 .

6. Procédé selon l'une quelconque des revendications précédentes, **caractérisé en ce que** la fonctionnalité moyenne des composés contenant une fonctionnalité méthacrylate (a1) est inférieure à 4, de préférence encore inférieure à 3.

7. Procédé selon l'une quelconque des revendications précédentes, **caractérisé en ce que** les composés contenant une fonctionnalité méthacrylate (a1) contiennent en outre au moins un groupe éther et au moins un groupe hydroxyle.

8. Procédé selon l'une quelconque des revendications précédentes, **caractérisé en ce que** les composés contenant une fonctionnalité méthacrylate (a1) contiennent en outre au moins un groupe uréthane.

9. Procédé selon l'une quelconque des revendications précédentes, **caractérisé en ce que** la composition comprend un composé contenant une fonctionnalité méthacrylate (a1) ayant une masse moléculaire moyenne en nombre Mₙ d'au moins 600 ° Daltons et la composition comprend en outre un composé à insaturation éthylénique (a2) ayant une masse moléculaire moyenne en nombre Mₙ d'au maximum 300 Daltons.

10. Procédé selon l'une quelconque des revendications précédentes, **caractérisé en ce que** la quantité de composé (b) par rapport à la quantité totale des composés (a) et (b) est de 25 à 65 % en poids.

11. Procédé selon l'une quelconque des revendications précédentes, **caractérisé en ce que** la quantité d'amine aromatique tertiaire (composé (c)) par rapport à la quantité totale de composé (a) et de composé (b) est de 0,01 à 10 % en poids.

12. Procédé selon l'une quelconque des revendications précédentes, **caractérisé en ce que** la quantité molaire de peranhydride (composé (d)) par rapport à la quantité molaire d'amine aromatique tertiaire (composé (c)) est de 0,05 à 10.

13. Procédé selon l'une quelconque des revendications précédentes, **caractérisé en ce que** la quantité de peranhydride (composé (d)) par rapport à la quantité totale des composés (a) et (b) est de 0,01 à 30 % en poids.

14. Système à plusieurs composants comprenant un composé contenant une fonctionnalité méthacrylate (a1), un monomère copolymérisable avec ledit composé contenant une fonctionnalité méthacrylate, une amine aromatique tertiaire (c) et un peranhydride (d), **caractérisé en ce que** le système comprend un composé (b) répondant à la formule (1) en tant que monomère copolymérisable avec ledit composé contenant une fonctionnalité méthacrylate 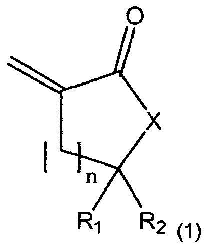 où
n = 0-3 ;
R₁ et R₂ représentent chacun individuellement H, un alkyle en C₁-C₂₀, un cycloalkyle en C₃-C₂₀, un aryle en C₆-C₂₀, un alkylaryle en C₇-C₂₀ ou un arylalkyle en C₇-C₂₀ ;
X = O, S ou NR₃ où
R₃ = H, un alkyle en C₁-C₂₀, un cycloalkyle en C₃-C₂₀, un aryle en C₆-C₂₀, un alkylaryle en C₇-C₂₀, un arylalkyle en C₇-C₂₀ ou une partie d'une chaîne de polymère ou est attaché à une chaîne de polymère.

15. Composition thermodurcissable comprenant un composé contenant une fonctionnalité méthacrylate (a1), un monomère copolymérisable avec ledit composé contenant une fonctionnalité méthacrylate et une amine aromatique tertiaire (c), **caractérisée en ce que** la composition comprend un composé (b) répondant à la formule (1) en tant que monomère copolymérisable avec ledit composé contenant une fonctionnalité méthacrylate 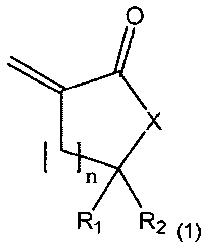 où
n = 0-3 ;
R₁ et R₂ représentent chacun individuellement H, un alkyle en C₁-C₂₀, un cycloalkyle en C₃-C₂₀, un aryle en C₆-C₂₀, un alkylaryle en C₇-C₂₀ ou un arylalkyle en C₇-C₂₀ ;
X = O, S ou NR₃ où
R₃ = H, un alkyle en C₁-C₂₀, un cycloalkyle en C₃-C₂₀, un aryle en C₆-C₂₀, un alkylaryle en C₇-C₂₀, un arylalkyle en C₇-C₂₀ ou une partie d'une chaîne de polymère ou est attaché à une chaîne de polymère,
et la composition comprend une charge organique ou inorganique et la composition étant durcissable avec un peranhydride.

16. Objet durci obtenu par le procédé selon l'une quelconque des revendications 1-13 ou obtenu par mélange des composés du système à plusieurs composants selon la revendication 14 ou obtenu par durcissement de la composition thermodurcissable selon la revendication 15 avec un peranhydride.

17. Utilisation de l'objet durci selon la revendication 16 dans l'automobile, des bateaux, l'ancrage chimique, la couverture de toits, la construction, des récipients, le regarnissage, des tuyaux, des cuves, le revêtement de sol ou des pales d'éoliennes.
